# EUROPÄISCHE PATENTSCHRIFT

(11) **EP 3 381 839 B1**
(45) Veröffentlichungstag und Bekanntmachung des Hinweises auf die Patenterteilung: **12.01.2022**
(21) Anmeldenummer: 18160613.8
(22) Anmeldetag: 08.03.2018
(51) Int. Cl.: B65G 1/137, G01S 5/02, G06F 3/01, A41D 19/00, G06K 17/00

(54) **KOMMISSIONIERSYSTEM UND VERFAHREN ZUM KOMMISSIONIEREN**
PICKING SYSTEM AND PICKING METHOD
SYSTÈME DE COMMISSIONNEMENT ET PROCÉDÉ DE COMMISSIONNEMENT

(30) Priorität: 28.03.2017 DE 102017002998
(43) Veröffentlichungstag der Anmeldung: 03.10.2018
(73) Patentinhaber: AUDI AG, 85045 Ingolstadt (DE)
(72) Erfinder: Brigl, Tobias, 92339 Beilngries (DE)

(56) Entgegenhaltungen:
- EP-A1- 1 630 716
- WO-A2-2006/015236
- DE-A1-102015 111 506
- GB-A- 2 448 166
- JP-A- 2002 347 937
- US-A1- 2013 127 980
- US-B1- 9 381 645

## Beschreibung

Die Erfindung betrifft ein Kommissioniersystem mit einer Kommissioniervorrichtung, sowie ein Verfahren zum Kommissionieren wenigstens eines Objekts.

Die US 9,381,645 B1 beschreibt ein System zum Lagern und Wiederauffinden von Gegenständen unter Verwendung eines Robotermanipulators. Jeweilige Sensoren können dabei beispielsweise in einem Handschuh einer Bedienperson angeordnet sein. Darüber hinaus können Positionssensoren vorgesehen sein, mittels welchen eine Position oder Ausrichtung von Körperteilen der Bedienperson, eines weiteren manuellen Manipulators oder eines Gegenstands anhand von Sensordaten angegeben werden kann. Die Positionssensoren können 3D-Sensoren umfassen, welche Radarsysteme aufweisen können. Aus der EP 2 554 496 A1 ist ein Kommissionierleitsystem für ein Lager bekannt. Hierbei ist ein Lichtprojektor vorgesehen, welcher eine Anzeige eines Weges zu einem Lagerplatz des Lagers hin, den Lagerplatz selbst oder eine Anzeige eines Weges von dem Lagerplatz weg, anzeigt.

Die EP 2 700 596 A1 beschreibt ein Kommissioniersystem, bei welchem an einer Regalfront eines Regals eine verfahrbare, optische Leitvorrichtung vorgesehen ist. Mittels dieser Leitvorrichtung können verschiedene Lichtstrahlen emittiert werden, durch welche eine von einem Kommissionierfahrzeug einzunehmende Position, ein vorgegebenes Regalfach des Regals oder eine vorgegebene Behältnisaufnahme des Kommissionierfahrzeugs optisch markiert werden können.

Aus der EP 2 711 880 A1 ist ein Verfahren zur Kommissionierung von Waren in einem Warenlager bekannt. Hierbei wird eine Auftragsliste abgearbeitet, wobei ein Kommissionierer mit einer tragbaren mobilen Einheit mit einer optischen Anzeigeeinrichtung ausgestattet ist und Waren auf ein fahrerloses Transportfahrzeug stapelt. Durch eine Datenverarbeitungsanlage erhält der Kommissionierer Koordinationsdaten für die jeweils nächste zu kommissionierende Ware der Auftragsliste, wobei die Koordinationsdaten sowohl an das Transportfahrzeug als auch an die mobile Einheit übermittelt werden.

Das Dokument EP 1 630 716 A1 offenbart ein Kommissioniersystem mit einer Kommissioniervorrichtung, wobei die Kommissioniervorrichtung wenigstens einen Handschuh umfasst, wobei das Kommissioniersystem wenigstens ein tragbares Ausgabegerät und eine Steuereinheit umfasst, wobei die Steuereinheit dazu ausgebildet ist, zumindest einen, eine Ist-Objektanzahl des zumindest einen Objekts charakterisierenden Kommissionierungsdatensatz von dem wenigstens einen, tragbaren Ausgabegerät zu empfangen, wobei die wenigstens eine Steuereinheit einen Soll-Kommissionierungsdatensatz umfasst, welcher eine Soll-Objektanzahl aufweist, wobei die Steuereinheit dazu ausgebildet ist, wenigstens einen, zumindest einen Differenzwert zwischen dem Soll-Kommissionierungsdatensatz und dem Kommissionierungsdatensatz charakterisierenden Differenzdatensatz zu ermitteln und zumindest mit dem wenigstens einen tragbaren Ausgabegerät auszutauschen.

Aufgabe der vorliegenden Erfindung ist es, ein Kommissioniersystem sowie ein Verfahren der eingangs genannten Art zu schaffen, mittels welchen Kommissioniervorgänge besonders aufwandsarm durchgeführt werden können.

Diese Aufgabe wird durch ein Kommissioniersystem mit den Merkmalen des Patentanspruchs 1, sowie durch ein Verfahren gemäß Patentanspruch 5 gelöst.

Ein erfindungsgemäßes Kommissioniersystem umfasst eine Kommissioniervorrichtung, welche wenigstens einen Handschuh umfasst, an welchem zumindest ein Radarmodul angeordnet ist, mittels welchem Radarstrahlung zur Identifizierung wenigstens eines Objekts, bei welcher eine Erkennung einer Art des Objekts erfolgt, bei einem Kommissioniervorgang emittierbar ist und welches zur Erfassung von an dem zumindest einen Objekt reflektierter Radarstrahlung ausgebildet ist. Dies ist von Vorteil, da die Kommissioniervorrichtung somit unmittelbar am Körper, bzw. an einem Arm einer Bedienperson getragen werden kann, wodurch beispielsweise aufwändige, aus dem Stand der Technik bekannte Leitsysteme entfallen können. Dadurch können Kommissioniervorgänge insgesamt besonders aufwandsarm erfolgen.

Das zumindest eine Radarmodul kann an dem Handschuh lösbar fixiert sein.

Dadurch kann der Handschuh als Verbrauchsgut unabhängig von dem Radarmodul ausgetauscht und das Radarmodul jederzeit an einem Ersatzhandschuh fixiert und damit wiederverwendet werden.

Unter dem Begriff "Radarstrahlung" sind im Rahmen der Erfindung elektromagnetische Wellen zu verstehen, welche zur Detektion und Identifikation des wenigstens einen Objekts mittels des Radarmoduls emittiert und als an dem Objekt reflektierte Radarstrahlung erfasst werden können. Bei der Identifikation kann sowohl eine Objekterkennung, also eine Erkennung der Art des Objektes, als auch beispielsweise eine Ermittlung einer Anzahl des Objektes erfolgen. Insbesondere kann das Radarmodul dazu ausgebildet sein, eine Mehrzahl an Objekten voneinander zu unterscheiden, also als jeweils verschiedene Objekte zu identifizieren, wodurch ein zumindest weitgehend fehlerfreier Kommissioniervorgang erfolgen kann.

Das Identifizieren kann insbesondere während eines Greifvorgangs, also bei einer Annäherung einer den Handschuh tragenden Hand einer Bedienperson an das Objekt erfolgen. Dadurch ist eine besonders gezielte und frühzeitige Identifikation des Objektes möglich, noch bevor die Bedienperson das Objekt aufgenommen hat.

Zur Datenverarbeitung und Ansteuerung des Radarmoduls kann die Kommissioniervorrichtung allgemein eine Recheneinheit (CPU, ECU) umfassen. Diese Recheneinheit kann in den Handschuh integriert sein oder als von dem Handschuh getrennte, externe Recheneinheit ausgebildet sein. Des Weiteren kann die Recheneinheit in einem externen Rechenzentrum integriert sein.

Die Kommissioniervorrichtung kann auch beispielsweise zumindest ein in den Handschuh integriertes Vibrationsmodul umfassen. Dies ist von Vorteil um einen Benutzer der Kommissioniervorrichtung zuverlässig darüber zu informieren, ob der Kommissioniervorgang korrekt ist. So können beispielsweise auch hör- oder sehbehinderte Bedienpersonen zuverlässig darüber informiert werden, ob das richtige Objekt kommissioniert wird oder wurde.

Das zumindest eine Vibrationsmodul kann auch dazu ausgebildet sein wenigstens einen Morsecode durch Vibration zu emittieren. Durch Vibration in Form eines derartigen Morsecodes können auch komplexere Informationen unabhängig von der Hör- oder Sehfähigkeit der Bedienperson an eine den Handschuh tragende Hand übertragen werden. Des Weiteren kann auch ein zusätzlicher Lautsprecher zur Wiedergabe von akustischen Signalen vorgesehen sein.

Das Kommissioniersystem umfasst wenigstens ein tragbares Ausgabegerät, welches dazu ausgebildet ist, wenigstens einen, das wenigstens eine Objekt charakterisierenden Datensatz mit dem zumindest einen Radarmodul auszutauschen. Dies ist von Vorteil, da eine Bedienperson durch das Ausgabegerät ohne weitere externe Anzeigeelemente darüber informiert werden kann, welches Objekt kommissioniert wurde oder ob der Kommissioniervorgang korrekt ausgeführt wurde. Der Datensatz kann beispielsweise Informationen über jeweilige Abmessungen oder ein Gewicht des Objekts umfassen, welche dann mittels des Ausgabegeräts über eine Anzeige visuell und zusätzlich oder alternativ akustisch und zusätzlich oder alternativ haptisch (beispielsweise durch Vibrationen) ausgegeben werden kann. Beispielsweise kann es sich bei dem Objekt um eine Schraube handeln, sodass der mittels des Radarmoduls erzeugte Datensatz beispielsweise Informationen über einen Gewindedurchmesser und zusätzlich oder alternativ eine Gewindelänge zur Ausgabe für das Ausgabegerät bereitstellen kann. Dadurch kann der Kommissioniervorgang erfolgen, ohne dass die Bedienperson manuelle Messungen durchführen muss. Ein besonderer Vorteil hierbei ist, dass sogar beispielsweise falsch in einem Kommissionierregal oder Kommissionierfach abgelegte Objekte durch das Zusammenwirken des Radarmoduls mit dem Ausgabegerät besonders schnell erkannt werden können, was durch aus dem Stand der Technik bekannte Kommissioniersysteme nicht oder nur mit größerem Aufwand möglich ist.

Erfindungsgemäß umfasst das Kommissioniersystem wenigstens eine Steuereinheit, welche dazu ausgebildet ist, zumindest einen, eine Ist-Objektart und zusätzlich oder alternativ eine Ist-Objektanzahl des zumindest einen Objekts charakterisierenden Kommissionierungsdatensatz von dem zumindest einen Radarmodul und zusätzlich oder alternativ von dem wenigstens einen, tragbaren Ausgabegerät zu empfangen. Dies ist von Vorteil, da mit dem Kommissionierungsdatensatz Informationen über ein momentan kommissioniertes Objekt und zusätzlich oder alternativ auch Bestandsangaben (Ist-Objektanzahl) an die Steuereinheit übermittelt werden können. Dadurch kann beispielsweise eine Inventur erheblich erleichtert und insbesondere während des Kommissioniervorgangs durchgeführt werden. Die Steuereinheit kann auch als Leitrechner bezeichnet werden. Die Steuereinheit kann über eine Drahtlos-Verbindung mit dem Radarmodul gekoppelt werden. Dadurch ist ein einfacher Informationsaustausch zwischen einer Mehrzahl von Kommissioniervorrichtungen und der Steuereinheit möglich.

Erfindungsgemäß umfasst die wenigstens eine Steuereinheit einen Soll-Kommissionierungsdatensatz, welcher eine Soll-Objektart und/oder eine Soll-Objektanzahl aufweist, wobei die Steuereinheit dazu ausgebildet ist, wenigstens einen, zumindest einen Differenzwert zwischen dem Soll-Kommissionierungsdatensatz und dem Kommissionierungsdatensatz charakterisierenden Differenzdatensatz zu ermitteln und zumindest mit dem wenigstens einen tragbaren Ausgabegerät auszutauschen. Dies ist von Vorteil, da durch die Ermittlung des Differenzdatensatzes mittels des Soll-Kommissionierungsdatensatzes in der Steuereinheit ermittelt werden kann, ob der Kommissioniervorgang korrekt ausgeführt wird oder wurde. Entsprechende Rechenoperationen können somit durch die Steuereinheit durchgeführt werden, wodurch eine Recheneinheit des Radarmoduls entlastet werden kann. Dadurch kann ein Energieverbrauch beim Betrieb der tragbaren Kommissioniervorrichtung gesenkt werden, wodurch beispielsweise eine Laufzeit eines, das Radarmodul und die Recheneinheit versorgenden, tragbaren Akkus verlängert werden kann.

In einer vorteilhaften Weiterbildung der Erfindung ist das zumindest eine Radarmodul an einem, einer Handinnenfläche zugeordneten, Handschuhinnenbereich, oder an einem, einem Handrücken zugeordneten, Handschuhrückenbereich oder an einem, einem Finger zugeordneten, Handschuhfingerbereich angeordnet. Derartige Anordnungen sind allgemein von Vorteil, da hierdurch eine besonders exakte Ausrichtung der Radarstrahlung auf das zu identifizierende Objekt ermöglicht ist. Insbesondere kann hierdurch die Ausrichtung intuitiv durch die Bedienperson und ohne weitere, die Radarstrahlung ausrichtende Hilfsmittel erfolgen.

Eine Anordnung des Radarmoduls am Handschuhinnenbereich ist von Vorteil, da beim Greifen ein besonders dichtes Heranführen des Radarmoduls an das zu identifizierende Objekt erfolgt, wodurch eine besonders zuverlässige Identifikation des Objekts ermöglicht ist.

Eine Anordnung des Radarmoduls am Handschuhrückenbereich ist von Vorteil, da hierdurch auch besonders große Objekte aufgenommen werden können, ohne dass das Radarmodul dabei einen Greifvorgang stört.

Eine Anordnung des Radarmoduls am Handschuhfingerbereich ist von Vorteil, da hierdurch bereits in größerer Distanz ein intuitives und genaues Ausrichten der Radarstrahlung auf das zu identifizierende Objekt ermöglicht ist. Dies kann bevorzugt beispielsweise durch einen Fingerzeig erfolgen.

In einer weiteren vorteilhaften Weiterbildung der Erfindung ist wenigstens ein in Abhängigkeit von einer Handbewegung elastisch verformbares, an dem Handschuh fixiertes Gehäuse vorgesehen, in welchem das zumindest eine Radarmodul aufgenommen ist. Dies ist von Vorteil, da das Radarmodul mittels des elastisch verformbaren Gehäuses einerseits auch beim Kommissionieren von harten oder kantigen Objekten ausreichend geschützt ist und andererseits aufgrund der Flexibilität eine zumindest weitgehend ungehinderte Handbewegung mit dem Handschuh erfolgen kann. Das Radarmodul kann beispielsweise zumindest bereichsweise in ein Dämpfungselement, beispielsweise in Silikon, eingebettet und dadurch gegenüber jeweiligen Gehäusewänden des Gehäuses abgestützt sein. Dadurch kann das Radarmodul besonders einfach vor Erschütterungen, beispielsweise in Form von Stößen geschützt werden. In einer vorteilhaften Weiterbildung der Erfindung ist das wenigstens eine tragbare Ausgabegerät als Armbanduhr, als am Kopf tragbares Display, als Tablet-Computer oder als Laptop ausgebildet. Dies ist von Vorteil, da durch derartige Ausgabegeräte eine besonders zuverlässige Ausgabe des Datensatzes in visueller und zusätzlich oder alternativ akustischer und zusätzlich oder alternativ haptischer Form erfolgen kann. Bevorzugt ist das als Armbanduhr ausgebildete Ausgabegerät als sogenannte Smartwatch ausgestaltet.

Ein weiterer Aspekt der Erfindung betrifft ein Verfahren nach Patentanspruch 5 zum Kommissionieren wenigstens eines Objekts, bei welchem ein erfindungsgemäßes Kommissioniersystem verwendet wird. Die im Zusammenhang mit dem erfindungsgemäßen Kommissioniersystem vorgestellten Merkmale sowie deren Vorteile gelten entsprechend auch für das erfindungsgemäße Verfahren.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kommissioniersystems beschrieben worden sind. Aus diesem Grund sind die entsprechenden Weiterbildungen des erfindungsgemäßen Verfahrens hier nicht noch einmal beschrieben.

Ein aus dem Stand der Technik bekannter, manueller Kommissionierprozess in Teilelagern, welche im Automobilbereich auch als sogenannte "Supermärkte" bezeichnet werden, ist bedingt durch eine hohe Teilekomplexität mit hohem Suchaufwand verbunden und anfällig für Falsch-Komissionierungen. Deshalb werden derzeit vermehrt Mitarbeiter-Unterstützungssysteme (wie z.B. Pick-by-Light-Systeme) eingesetzt. Die Umsetzung derartiger Unterstützungssysteme benötigt hohe Investitionskosten, einen hohen Aufwand zur Pflege von Datenständen sowie einen hohen Adaptionsaufwand, sobald sich eine Teileanordnung ändert.

Durch das erfindungsgemäße Kommissioniersystem und das erfindungsgemäße Verfahren können diese Nachteile umgangen, bzw. beseitigt werden. Das Radarmodul kann das zu kommissionierende Objekt durch die Radarstrahlung abtasten und beispielsweise in Verbindung mit der Steuereinheit, welche auch als Leitrechner bezeichnet werden kann, überprüfen ob das richtige Objekt (Gegenstand) entnommen wird oder entnommen wurde. Die Rückmeldung, ob der Kommissioniervorgang korrekt oder fehlerhaft war, kann beispielsweise visuell und zusätzlich oder alternativ auditiv über das tragbare Ausgabegerät (z.B. Smartwatch) erfolgen. Eine Stromversorgung der Kommissioniervorrichtung kann allgemein beispielsweise über einen tragbaren Akku, welcher entweder direkt am Handschuh befestigt sein kann oder den die Bedienperson beispielsweise über einen Gürtel am Körper tragen kann, sichergestellt werden.

Eine Bedienperson kann also in vorteilhafter Weise den Handschuh samt Akku am Körper tragen, wodurch eine besonders hohe Mobilität sichergestellt ist. Ein aus dem Stand der Technik bekannter Anpassungsaufwand von starren Systeme, zu welchen beispielsweise Pick-by-Light Systeme gehören, entfällt. Während Pick-by-Light-Anlagen, bzw. -systeme stets mit hohen Investitionen verbunden sind, die vor allem aus der hohen Anzahl verwendeter Elektronik-Komponenten an einem Entnahmeregal resultieren, sind die Kommissioniervorrichtung sowie das Kommissioniersystem insgesamt besonders kostengünstig. Bei Verwendung der Kommissioniervorrichtung, deren Handschuh aufgrund des Radarmoduls sozusagen als "mobiler, intelligenter Handschuh" ausgebildet sein kann, ist eine von den Pick-by-Light-Systemen bekannte Technik an einem Regal nicht erforderlich.

Auch auf Barcodeerfassung basierende Geräte zur Objekt-Identifizierung sind durch die vorliegende Erfindung nicht mehr notwendig: Durch die vorliegende Erfindung wird ein allgemeines Problem umgangen, wonach nur wenige Artikel (Objekte) mit Barcodes ausgestattet sind. Eine durch die vorliegende Erfindung ermöglichte Objekterkennung mittels Radar ist völlig unabhängig von einem zweiten Medium (z.B. Barcode/RFID-Chip) auf dem Artikel (Objekt).

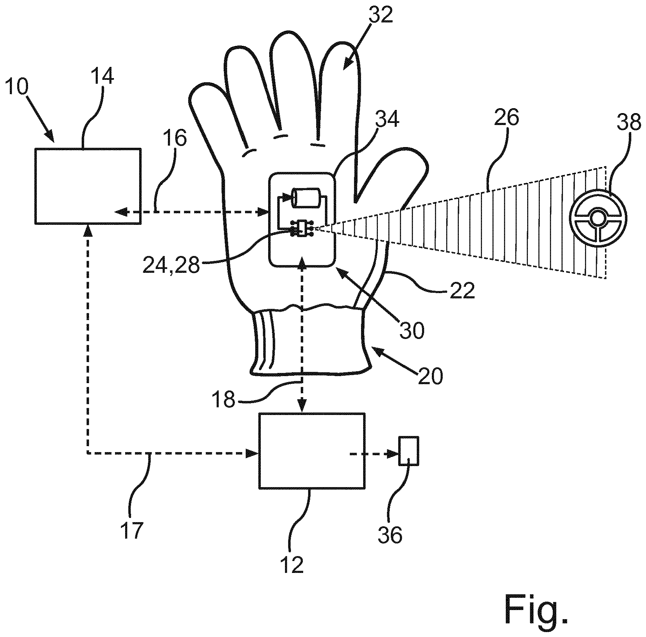

Im Folgenden sind Ausführungsbeispiele der Erfindung beschrieben. Hierzu zeigt die einzige Fig. eine schematische Darstellung eines Kommissioniersystems mit einer Kommissioniervorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

Die einzige Fig. zeigt eine schematische Darstellung eines Kommissioniersystems 10 mit einer Kommissioniervorrichtung 20. Die Kommissioniervorrichtung 20 umfasst wenigstens einen Handschuh 22 an welchem zumindest ein Radarmodul 24 angeordnet ist. Mittels des Radarmoduls 24 wird bei einem Kommissioniervorgang Radarstrahlung 26 zur Identifizierung wenigstens eines Objekts 38 emittiert und an dem zumindest einen Objekt 38 reflektierte Radarstrahlung erfasst. Das Objekt 38 ist vorliegend lediglich beispielhaft als Lenkrad ausgestaltet.

Die Kommissioniervorrichtung 20 umfasst ein elastisch verformbares, an dem Handschuh 22 fixiertes Gehäuse 34, in welchem das zumindest eine Radarmodul 24 zusammen mit einer Recheneinheit 28 zum Ansteuern des Radarmoduls 24 aufgenommen ist. Das Radarmodul 24 und die Recheneinheit 28 sind vorliegend zusammen mit dem Gehäuse 34 an einem, einer Handinnenfläche einer hier nicht weiter gezeigten Bedienperson zugeordneten Handschuhinnenbereich 30 des Handschuhs 22 fixiert. Alternativ dazu könnten das Radarmodul 24, die Recheneinheit 28 und das Gehäuse 34 an einem, einem Handrücken der Bedienperson zugeordneten, jedoch vorliegend verdeckten Handschuhrückenbereich oder an einem, einem Finger der Bedienperson zugeordneten, Handschuhfingerbereich 32 angeordnet sein, wenngleich dies vorliegend nicht dargestellt ist.

Das Kommissioniersystem 10 umfasst wenigstens ein tragbares Ausgabegerät 12, welches dazu ausgebildet ist, wenigstens einen, das wenigstens eine Objekt 38 charakterisierenden Datensatz mit dem zumindest einen Radarmodul 24 auszutauschen. Das wenigstens eine, tragbare Ausgabegerät 12 kann vorliegend eine als Smartwatch ausgebildete Armbanduhr sein, um nur ein Beispiel zu nennen. Mittels des Ausgabegeräts 12 ist eine visuelle, akustische und zusätzlich oder alternativ haptische Anzeige 36 möglich, durch welche der Bedienperson mitgeteilt werden kann, ob beim Kommissioniervorgang das richtige Objekt 36 kommissioniert wird oder kommissioniert wurde.

Das Kommissioniersystem 10 umfasst des Weiteren wenigstens eine Steuereinheit 14, welche dazu ausgebildet ist, zumindest einen, eine Ist-Objektart und zusätzlich oder alternativ eine Ist-Objektanzahl des zumindest einen Objekts 38 charakterisierenden Kommissionierungsdatensatz von dem zumindest einen Radarmodul 24 und zusätzlich oder alternativ von dem wenigstens einen tragbaren Ausgabegerät 12 zu empfangen.

Die Steuereinheit 14 umfasst einen Soll-Kommissionierungsdatensatz, welcher eine Soll-Objektart und zusätzlich oder alternativ eine Soll-Objektanzahl aufweist, wobei die Steuereinheit 14 dazu ausgebildet ist, wenigstens einen, zumindest einen Differenzwert zwischen dem Soll-Kommissionierungsdatensatz und dem Kommissionierungsdatensatz charakterisierenden Differenzdatensatz zu ermitteln und zumindest mit dem wenigstens einen tragbaren Ausgabegerät 12 auszutauschen. Der Differenzdatensatz kann dann als für die Bedienperson visuell, akustisch und zusätzlich oder alternativ haptische Ausgabe auf der Anzeige 36 ausgegeben werden.

Die Steuereinheit 14 (Leitrechner), das Radarmodul 24, bzw. die Recheneinheit 28 und das tragbare Ausgabegerät 12 sind vorliegend über jeweilige Drahtlos-Verbindungen 16, 17, 18 miteinander gekoppelt, wodurch sozusagen ein kabelloser Datenaustausch ermöglicht ist. Anstatt zumindest einer der Drahtlos-Verbindungen 16, 17, 18 ist auch zumindest eine kabelgebundene Verbindung möglich.

Insgesamt kann das Radarmodul 24 über die Steuereinheit 14 mit einer Datenbank (Soll-Kommissionierungsdatensatz) zusammenwirken, in welcher zur Identifizierung geeignete Charakteristika (beispielsweise Soll-Objektart und Soll-Objektanzahl) mehrerer bekannter Objekte 38 oder Bauteile gespeichert sein können.

Das Kommissioniersystem 10 kann zudem wenigstens zwei hier nicht weiter gezeigte Lagerfächer umfassen, in welchen jeweils unterschiedliche Objekte 38 gelagert sein können. Durch Vergleichen des Kommissionierungsdatensatzes (welcher auch als Ist-Kommissionierungsdatensatz bezeichnet werden kann) mit dem Soll-Kommissionierungsdatensatz kann der Differenzdatensatz ermittelt und dadurch überprüft werden, ob bei dem Kommissionierungsvorgang Art und Anzahl der tatsächlich kommissionierten Objekte 38 mit der Art und Anzahl gemäß dem Soll-Kommissionierungsdatensatz übereinstimmen. Das Kommissioniersystem 10 kann dazu ausgebildet sein, während des Kommissioniervorgangs zu überprüfen, ob das Objekt 38 korrekt kommissioniert wird. Dadurch ist eine frühzeitig Korrektur des Kommissioniervorgangs ermöglicht.

## Patentansprüche

1. Kommissioniersystem (10) mit einer Kommissioniervorrichtung (20), wobei die Kommissioniervorrichtung (20) wenigstens einen Handschuh (22) umfasst,
wobei an dem wenigstens einen Handschuh (22) zumindest ein Radarmodul (24) angeordnet ist, mittels welchem Radarstrahlung (26) zur Identifizierung wenigstens eines Objekts (38), bei einem Kommissioniervorgang emittierbar ist und welches zur Erfassung von an dem zumindest einen Objekt (38) reflektierter Radarstrahlung ausgebildet ist,
wobei das Kommissioniersystem (10) wenigstens ein tragbares Ausgabegerät (12) umfasst, welches dazu ausgebildet ist, wenigstens einen, das wenigstens eine Objekt (38) charakterisierenden Datensatz mit dem zumindest einen Radarmodul (24) auszutauschen,
wobei das Kommissioniersystem (10) wenigstens eine Steuereinheit (14) umfasst, welche dazu ausgebildet ist, zumindest einen, eine Ist-Objektart und/oder eine Ist-Objektanzahl des zumindest einen Objekts (38) charakterisierenden Kommissionierungsdatensatz von dem zumindest einen Radarmodul (24) und/oder von dem wenigstens einen, tragbaren Ausgabegerät (12) zu empfangen,
wobei die wenigstens eine Steuereinheit (14) einen Soll-Kommissionierungsdatensatz umfasst, welcher eine Soll-Objektart und/oder eine Soll-Objektanzahl aufweist, wobei die Steuereinheit (14) dazu ausgebildet ist, wenigstens einen, zumindest einen Differenzwert zwischen dem Soll-Kommissionierungsdatensatz und dem Kommissionierungsdatensatz charakterisierenden Differenzdatensatz zu ermitteln und zumindest mit dem wenigstens einen tragbaren Ausgabegerät (12) auszutauschen.

2. Kommissioniersystem (10) nach Anspruch 1,
**dadurch gekennzeichnet, dass**
das zumindest eine Radarmodul (24) an einem, einer Handinnenfläche zugeordneten, Handschuhinnenbereich (30), oder an einem, einem Handrücken zugeordneten, Handschuhrückenbereich oder an einem, einem Finger zugeordneten, Handschuhfingerbereich (32) angeordnet ist.

3. Kommissioniersystem (10) nach Anspruch 1 oder 2,
**dadurch gekennzeichnet, dass**
wenigstens ein in Abhängigkeit von einer Handbewegung elastisch verformbares, an dem Handschuh (22) fixiertes Gehäuse (34) vorgesehen ist, in welchem das zumindest eine Radarmodul (24) aufgenommen ist.

4. Kommissioniersystem (10) nach einem der vorhergehenden Ansprüche, **dadurch gekennzeichnet, dass**
das wenigstens eine, tragbare Ausgabegerät (12) als Armbanduhr, als am Kopf tragbares Display, als Tablet-Computer oder als Laptop ausgebildet ist.

5. Verfahren zum Kommissionieren wenigstens eines Objekts (38), bei welchem ein Kommissioniersystem (10) nach einem der Ansprüche 1 bis 4 verwendet wird.

## Claims

1. Picking system (10) having a picking device (20),
wherein the picking device (20) comprises at least one glove (22),
wherein on the at least one glove (22) is arranged at least one radar module (24) by means of which radar radiation (26) can be emitted during a picking procedure for identifying at least one object (38), and which is designed to detect radar radiation reflected at the at least one object (38),
wherein the picking system (10) comprises at least one wearable output device (12) which is configured to exchange at least one dataset, characterising the at least one object (38), with the at least one radar module (24),
wherein the picking system (10) comprises at least one control unit (14) which is configured to receive at least one picking dataset, characterising one actual object type and/or one actual object number of the at least one object (38), from the at least one radar module (24) and/or from the at least one wearable output device (12),
wherein the at least one control unit (14) comprises a target picking dataset, which has a target object type and/or a target object number, wherein the control unit (14) is configured to determine at least one dataset characterising at least one difference value between the target picking dataset and the picking dataset and to exchange it at least with the at least one wearable output device (12).

2. Picking system (10) according to claim 1,
**characterised in that**
the at least one radar module (24) is arranged on a glove internal region (30) assigned to a palm, or on a glove back region assigned to a hand back, or on a glove finger region (32) assigned to a finger.

3. Picking system (10) according to claim 1 or 2,
**characterised in that**
at least one housing (34) is provided which is elastically deformable depending on a hand movement and fixed to the glove (22), in which housing the at least one radar module (24) is accommodated.

4. Picking system (10) according to any of the preceding claims,
**characterised in that**
the at least one wearable output device (12) is designed as a wristwatch, as a display which can be worn on the head, as a tablet computer or as a laptop.

5. Method for picking at least one object (38) in which a picking system (10) according to any of claims 1 to 4 is used.

## Revendications

1. Système de préparation de commandes (10) avec un dispositif de préparation de commandes (20),
dans lequel le dispositif de préparation de commandes (20) comprend au moins un gant (22),
dans lequel au moins un module de radar (24) est agencé au niveau de l'au moins un gant (22), au moyen duquel un rayonnement radar (26) peut être émis pour l'identification d'au moins un objet (38) pour un processus de préparation de commandes et qui est réalisé pour la détection du rayonnement radar réfléchi au niveau de l'au moins un objet (38),
dans lequel le système de préparation de commandes (10) comprend au moins un appareil de sortie (12) portable qui est réalisé afin d'échanger au moins un jeu de données caractérisant l'au moins un objet (38) contre l'au moins un module radar (24),
dans lequel le système de préparation de commandes (10) comprend au moins une unité de commande (14) qui est réalisée afin de recevoir au moins un jeu de données de préparation de commandes caractérisant un type d'objet réel et/ou un nombre d'objet réel d'au moins un objet (38) par l'au moins un module de radar (24) et/ou par l'au moins un appareil de sortie (12) portable,
dans lequel l'au moins une unité de commande (14) comprend un jeu de données de préparation de commandes de consigne qui présente un type d'objet de consigne et/ou un nombre d'objet de consigne, dans lequel l'unité de commande (14) est réalisée afin de déterminer au moins un jeu de données de différence caractérisant au moins une valeur de différence entre le jeu de données de préparation de commandes de consigne et le jeu de données de préparation de commandes et de l'échanger au moins contre l'au moins un appareil de sortie (12) portable.

2. Système de préparation de commandes (10) selon la revendication 1,
**caractérisé en ce que**
l'au moins un module de radar (24) est agencé au niveau d'une zone intérieure de gant (30) associée à une paume de main, ou au niveau d'une zone arrière de gant associée à un dos de main ou au niveau d'une zone de doigt de gant (32) associée à un doigt.

3. Système de préparation de commandes (10) selon la revendication 1 ou 2, **caractérisé en ce qu'**
au moins un boîtier (34) fixé au gant (22), déformable élastiquement en fonction d'un mouvement de la main est prévu, dans lequel l'au moins un module de radar (24) est reçu.

4. Système de préparation de commandes (10) selon l'une quelconque des revendications précédentes,
**caractérisé en ce que**
l'au moins un appareil de sortie (12) portable est réalisé comme montre-bracelet, comme affichage portable sur la tête, comme ordinateur tablette ou comme ordinateur portable.

5. Procédé de préparation de commandes d'au moins un objet (38), pour lequel un système de préparation de commandes (10) selon l'une quelconque des revendications 1 à 4 est utilisé.
